# EUROPÄISCHE PATENTSCHRIFT

(11) **EP 3 427 617 B1**
(45) Veröffentlichungstag und Bekanntmachung des Hinweises auf die Patenterteilung: **18.11.2020**
(21) Anmeldenummer: 18181187.8
(22) Anmeldetag: 02.07.2018
(51) Int. Cl.: A47J 31/46

(54) **HEISSGETRÄNKEAUTOMAT**
HOT DRINKS MACHINE
DISTRIBUTEUR DE BOISSONS CHAUDES

(30) Priorität: 14.07.2017 DE 102017212112
(43) Veröffentlichungstag der Anmeldung: 16.01.2019
(73) Patentinhaber: BSH Hausgeräte GmbH, 81739 München (DE)
(72) Erfinder: Moser, Veronika, 83313 Siegsdorf (DE); Baumgart, Stefan, 83308 Trostberg (DE)

(56) Entgegenhaltungen:
- EP-A1- 1 915 932
- WO-A1-2011/080029
- WO-A1-2014/032110
- AT-B- 320 899
- DE-A1- 3 316 158
- DE-A1-102004 046 436

## Beschreibung

Die vorliegende Erfindung betrifft einen Heißgetränkeautomaten, insbesondere einen Kaffeevollautomaten, mit einem Wassertank, einer von diesem Wassertank zu einer Heizeinrichtung führenden Wasserleitung, einer zwischen dem Wassertank und der Heizeinrichtung in der Wasserleitung angeordneten Pumpe sowie einer stromab der Heizeinrichtung angeordneten Brüheinrichtung gemäß dem Oberbegriff des Anspruchs 1.

Beim Betrieb von aus dem Stand der Technik bekannten Heißgetränkeautomaten entstehen unter Umständen folgende Drucksituationen: Beispielsweise ein Überdruck beim Aufheizen, ein Überdruck durch eine Verstopfung im Leitungssystem sowie ein Unterdruck beim Abkühlen. Der Überdruck beim Aufheizen entsteht durch das sich beim Aufheizen ausdehnende Wasser im System und ist insbesondere bei Geräten mit Boilern zu berücksichtigen. Ein durch eine Verstopfung hervorgerufener Überdruck kann bspw. durch Kalkbrocken oder Kaffee/Tee bedingt sein, der einen Wasserauslass blockiert. Sämtliche der zuvor erwähnten Drucksituationen müssen dabei bei der Geräteherstellung und Entwicklung berücksichtigt werden, wobei bislang zur Handhabung dieser Drucksituationen entsprechende Ventile, wie z.B. aus der AT 320 899 B bekannt, oder andere Bauteile eingesetzt wurden, die einen erforderlichen Druckausgleich ermöglichen.

Nachteilig bei aus dem Stand der Technik bekannten Heißgetränkeautomaten ist jedoch das Vorsehen der zuvor beschriebenen Ventile, bspw. als Überdruckventile oder Unterdruckventile, da derartige Ventile üblicherweise konstruktiv aufwendig und damit teuer sind und zudem zusätzliche Montagekosten zur Integration in das Fluidsystem des Heißgetränkeautomaten erfordern.

Die vorliegende Erfindung beschäftigt sich daher mit dem Problem, für einen Heißgetränkeautomaten der gattungsgemäßen Art eine verbesserte oder zumindest eine alternative Ausführungsform anzugeben, die insbesondere einen konstruktiv einfachen Druckausgleich ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, anstelle bislang eingesetzter Überdruck- bzw. Unterdruckventile nun erstmals einen Druckausgleichspfad zwischen einem Fluidsystem eines Heißgetränkeautomaten und einer Umgebung vorzusehen, in dessen Verlauf ein Durchfluss begrenzendes Element, bspw. eine Drossel oder eine Blende, angeordnet sind. Der Heißgetränkeautomat, welcher bspw. als Kaffeevollautomat oder als Kapselgerät ausgebildet sein kann, weist dabei in bekannter Weise einen Wassertank, eine vom Wassertank zu einer Heizeinrichtung führende Wasserleitung, eine zwischen dem Wassertank und der Heizeinrichtung in der Wasserleitung angeordnete Pumpe sowie eine stromab der Heizeinrichtung am Ende der Wasserleitung angeordnete Brüheinrichtung auf. Erfindungsgemäß ist nun der Druckausgleichspfad vorgesehen, der an einer Abzweigung zwischen der Pumpe und der Heizeinrichtung aus der Wasserleitung abzweigt und der oberhalb eines Wasserspiegels in den Wassertank mündet, wobei in diesem Druckausgleichspfad das zuvor beschriebene Durchfluss begrenzende Element, hier eine Blende oder eine Drossel, angeordnet ist. Mit dem erfindungsgemäß erstmals vorgesehenen Druckausgleichspfad und der darin angeordneten Drossel bzw. Blende wird auf die bislang erforderlichen Ventile verzichtet, die einen Überdruck während dem Aufheizen oder einen Unterdruck beim Abkühlen des Systems ausgleichen. Hierdurch lassen sich insbesondere die Herstellungskosten des Heißgetränkeautomaten verringern, ebenso wie die Komplexität durch eine geringere Anzahl an Bauteilen. Durch die geringere Anzahl an Bauteilen entstehen auch geringere Lager- und Logistikkosten. Des Weiteren kann mit dem erfindungsgemäßen Druckausgleichspfad auch die Gefahr von Leckagen im Fluidsystem und die Ausfallwahrscheinlichkeit des Heißgetränkeautomaten an sich verringert werden. Von besonderem Vorteil ist darüber hinaus, dass der Druckausgleichspfad mit der Blende bzw. der Drossel deutlich weniger Fehler anfällig ist, da die einzige denkbare Funktionsstörung das Verstopfen der Blende bzw. der Drossel ist. Selbst dies führt jedoch weder zu einer Undichtigkeit des Fluidsystems, noch zu einem Totalausfall des Getränkeautomaten, wobei dieser Fehler von einem Benutzer unter Umständen gar nicht bemerkt werden würde, da er im Normalbetrieb des Heißgetränkeautomaten bei einem spezifikationsgemäßen Rückschlagventil keine Konsequenzen hat. Die Gefahr des Verstopfens der Blende bzw. der Drossel wird zudem dadurch reduziert, dass die Drossel bzw. die Blende oder generell das Durchfluss begrenzende Element bei jedem Brühvorgang und/oder auch bei einem Entkalkungsvorgang in beide Richtungen durchströmt und dadurch unter Umständen gereinigt wird.

Bei einer vorteilhaften Weiterbildung der erfindungsgemäßen Lösung zweigt der Druckausgleichspfad unmittelbar stromauf der Heizeinrichtung aus der Wasserleitung ab. Die Abzweigung ist somit im Kaltwasserbereich angeordnet, wodurch einerseits vermieden werden kann, dass heißes Wasser in den Wassertank zurückgefördert und dadurch Energie verschwendet wird und sich andererseits die Blende bzw. die Drossel im Kaltwasserbereich befindet, wodurch die Gefahr einer Verkalkung der Drossel bzw. der Blende deutlich reduziert werden kann.

Bei einer weiteren vorteilhaften Ausführungsform der erfindungsgemäßen Lösung ist die Blende oder die Drossel im Bereich der Einmündung des Druckausgleichspfad in den Wassertank angeordnet. Dies hat den großen Vorteil, dass bei einem Unterdruck im Fluidsystem, das heißt in der Wasserleitung, nur wenig bis gar kein Wasser durch die Blende oder die Drossel eingesaugt werden muss, bevor Luft angesaugt wird. Hierdurch kann der Druckausgleich schneller hergestellt werden, da der Widerstand der Blende oder der Drossel für einen Luftdurchfluss kleiner ist als für das Durchströmen mit Wasser. Alternativ ist selbstverständlich auch denkbar, dass die Blende oder die Drossel im Bereich der Abzweigung des Druckausgleichpfads aus der Wasserleitung angeordnet ist. Hierdurch könnte bspw. die Abzweigung und die Drossel zusammen mit der Heizeinrichtung als Baugruppe hergestellt werden, wodurch unter Umständen Montage- und Kostenvorteile erzielbar sind.

Zweckmäßig ist zwischen dem Wassertank und der Pumpe ein Sieb angeordnet, dessen Maschenweite kleiner ist als eine Öffnung der Blende oder der Drossel. Durch ein derartiges Sieb, welches bspw. am Anschluss der Wasserleitung an den Wassertank angeordnet ist, können insbesondere Partikel bzw. Feststoffe oder Kalkablagerungen abgefangen werden, die unter Umständen zu einer Verstopfung der Blende oder der Drossel führen können.

Bei einer weiteren vorteilhaften Ausführungsform des erfindungsgemäßen Heißgetränkeautomaten sind die Blende oder die Drossel zumindest teilweise aus Edelstahl oder aus Polytetrafluorethylen ausgebildet, wodurch das Anhaften von bspw. Kalk an der Drossel oder der Blende vermieden, zumindest aber reduziert werden kann, wodurch die Langlebigkeit auch eine lang andauernde Funktionsfähigkeit unterstützt werden können.

Bei einer weiteren Ausführungsformen ist in der Wasserleitung stromauf der Pumpe ein Durchflussmengenmesser (flow meter) angeordnet. Mittels eines derartigen Durchflussmengenmessers lässt sich die Menge des herzustellenden Getränks überwachen, wobei ggf. die Länge des Druckausgleichspfads unter Umständen rechnerisch berücksichtigt werden muss, da die im Druckausgleichspfad vorhandene Wassermenge ansonsten das Brühergebnis negativ beeinträchtigen kann. Besonders vorteilhaft ist, sofern der Druckausgleichspfad vergleichsweise kurz ist, so dass die in diesem zwischen der Abzweigung und der Drossel oder der Blende verbleibende Wassermenge möglichst gering ist. Dies bietet zudem den großen Vorteil, dass bei einem Belüften der Wasserleitung nach Abschluss des Brühvorgangs aufgrund des dann entstehenden Unterdrucks nur wenig Wasser aus dem Druckausgleichspfad in die noch warme Heizeinrichtung befördert wird, wodurch insbesondere auch ein durch diesen Effekt dort stattfindender Druckaufbau durch Verdampfung verhindert werden kann.

Bei einer weiteren vorteilhaften Ausführungsform der erfindungsgemäßen Lösung weist der Druckausgleichspfad einen lichten Durchflussquerschnitt von ca. 0,785 mm² auf. Dies entspricht einem lichten Innendurchmesser von ca. 1 mm, woraus bereits ersichtlich ist, dass der Druckausgleichspfad tatsächlich lediglich einem Druckausgleich dienen soll.

Zweckmäßig ist in der Wasserleitung stromab der Heizeinrichtung und stromauf der Brüheinrichtung ein Rücklaufsperrventil angeordnet. Ein derartiges Rücklaufsperrventil verhindert nach dem Abschließen des Brühvorgangs ein Zurückfließen von warmem Wasser in die Heizeinrichtung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine erste mögliche Ausführungsform eines erfindungsgemäßen Heißgetränkeautomaten,
- Fig. 2: eine Darstellung wie in Fig. 1, jedoch bei anders angeordneter Blende bzw. Drossel.

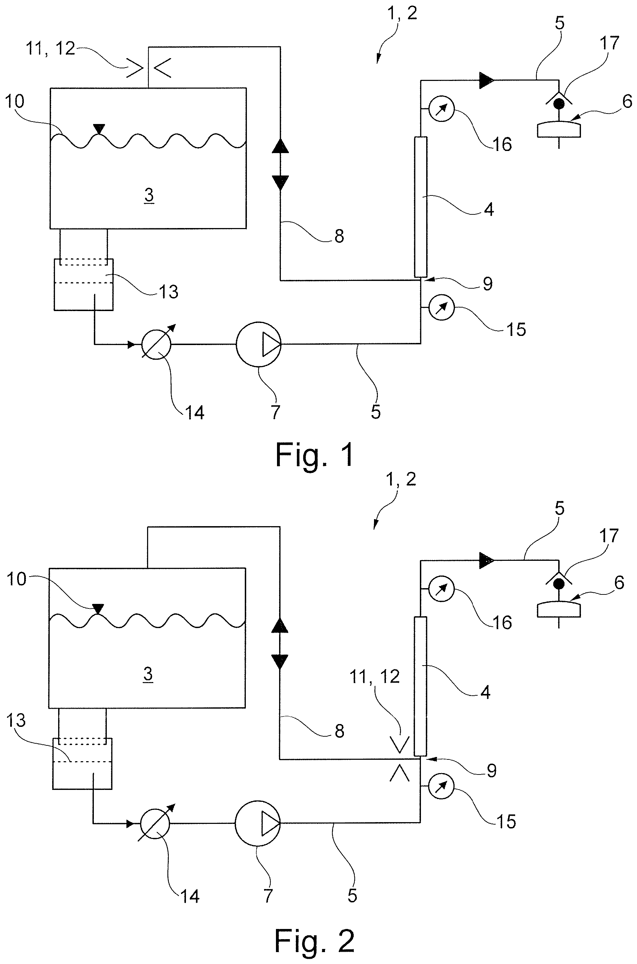

Entsprechend den Fig. 1 und 2, weist ein erfindungsgemäßer Heißgetränkeautomat 1, welcher bspw. als Kaffeevollautomat 2, ausgebildet sein kann, einen Wassertank 3 sowie eine vom Wassertank 3 zu einer Heizeinrichtung 4 führende Wasserleitung 5 auf. Im Weiteren führt die Wasserleitung 5 von der Heizeinrichtung 4 zu einer am Ende der Wasserleitung 5 angeordneten Brüheinrichtung 6, in welcher bspw. die mittels des Heißgetränkeautomaten 1 herzustellenden Heißgetränke aufgebrüht werden. Zwischen dem Wassertank 3 und der Heizeinrichtung 4 ist dabei eine Pumpe 7 vorgesehen, die Wasser aus dem Wassertank 3 über die Wasserleitung 5 und die Heizeinrichtung 4 der Brüheinrichtung 6 zuführt. Erfindungsgemäß ist nun ein Druckausgleichspfad 8 vorgesehen, der an einer Abzweigung 9 zwischen der Pumpe 7 und der Heizeinrichtung 4 aus der Wasserleitung 5 abzweigt und der oberhalb eines Wasserspiegels 10 in den Wassertank 3 mündet, wobei in dem Druckausgleichspfad 8 ein Durchfluss reduzierendes Element, das heißt eine Blende 11 oder eine Drossel 12 angeordnet ist. Durch den erfindungsgemäß vorgesehenen Druckausgleichspfad 8 kann erstmals auf bislang erforderliche, konstruktiv aufwendige und damit auch teure Ventileinrichtungen zum Abbau eines Überdrucks oder eines Unterdrucks in der Wasserleitung 5 verzichtet werden, wodurch sich die Herstellungskosten des Heißgetränkeautomaten 1 deutlich reduzieren lassen. Durch den Wegfall der bislang erforderlichen Ventile, reduzieren sich auch die Lager- und die Logistikkosten sowie die Teilevielfalt, wodurch sich die Herstellungskosten ebenfalls reduzieren lassen. Durch die geringere Anzahl an Bauteilen verringert sich zudem auch die Komplexität des erfindungsgemäßen Heißgetränkeautomaten 1. Ebenfalls verringert werden kann die Gefahr von Leckagen im Fluidsystem sowie die Auswahlwahrscheinlichkeit des Heißgetränkeautomaten 1. Bislang erforderliche, so genannte "damper tubes" oder ähnliche Drosseln zur Limitierung der Maximalleistung der Pumpe 7 können möglicherweise ebenfalls eingespart werden. Der erfindungsgemäß vorgesehene Druckausgleichspfad 8 mit einer Blende 11 oder einer Drossel 12 ist im Vergleich zu einem Ventil zudem deutlich weniger fehleranfällig, da die einzige denkbare Funktionsstörung das Verstopfen der Blende 11 bzw. der Drossel 12 ist. Dies führt dann allerdings weder zu einer Undichtigkeit des Systems an sich, noch zu einem Totalausfall des Heißgetränkeautomaten 1. Der Kunde würde diesen Fehler unter Umständen gar nicht bemerken, da im Normalbetrieb des Heißgetränkeautomaten 1 bei einem spezifikationsgemäßen Diaphragma keine Konsequenzen hat.

Betrachtet man die Fig. 1 und 2 weiter, so kann man erkennen, dass der Druckausgleichspfad 8 unmittelbar stromauf der Heizeinrichtung 4 aus der Wasserleitung 5 abzweigt, wobei die Länge des Druckausgleichspfads 8 vorzugsweise gering gehalten wird, um insbesondere beim Ausgleich eines in der Wasserleitung 5 und der Heizeinrichtung 4 aufgrund eines nach Abschluss des Brühvorgangs entstehenden Unterdrucks erfolgendes Ansaugen von Wasser aus dem Druckausgleichspfad möglichst gering halten zu können. Würde nämlich bspw. viel Wasser, das heißt in diesem Fall kaltes Wasser aus dem Druckausgleichspfad 8 angesaugt, so könnte dieses in der noch warmen Heizeinrichtung 4 zu einem Verdampfen und damit einem ungewollten Druckanstieg führen.

Betrachtet man den Heißgetränkeautomaten 1 gemäß der Fig. 1, so kann man erkennen, dass bei diesem die Blende 11 oder die Drossel 12 im Bereich der Einmündung des Druckausgleichspfads 8 in den Wassertank 3 angeordnet ist, während die Blende 11 bzw. die Drossel 12 bei dem Heißgetränkeautomaten 1 gemäß der Fig. 2 im Bereich der Abzweigung 9 des Druckausgleichspfads 8 aus der Wasserleitung 5 angeordnet ist. Besonders die in Fig. 1 gezeigte Ausführungsform bietet dabei den großen Vorteil, dass bei Unterdruck im Fluidsystem nur wenig Wasser durch die Blende 11 bzw. die Drossel 12 eingesaugt werden muss, bevor Luft angesaugt werden kann. Da der Widerstand der Blende 11 oder der Drossel 12 für eine Luftdurchströmung geringer ist als für eine Wasserdurchströmung, kann somit der Druckausgleich schneller erfolgen, als dies bspw. bei der Anordnung der Drossel 11 oder der Blende 12 nahe der Abzweigung 9 der Fall ist, wie dies gemäß der Fig. 2 gezeigt ist.

Eine Anordnung der Blende 11 bzw. der Drossel 12 nahe der Abzweigung 9 kann hingegen Kostenvorteile bei der Montage bedeuten, da in diesem Fall beispielsweise die Heizeinrichtung 4, die Abzweigung 9 und die Blende 11 oder die Drossel 12 bspw. als zusammenhängende Baugruppe vorgefertigt werden können.

Eine einzige mögliche Fehlerquelle könnte durch ein Verstopfen der Blende 11 bzw. der Drossel 12 erfolgen, wobei diese Gefahr vergleichsweise gering ist, da bei jedem Brühvorgang die Blende 11 bzw. die Drossel 12 in beide Richtungen durchströmt und dadurch rückgespült wird. Eine Verstopfung der Blende 11 bzw. der Drossel 12 könnte bspw. durch Kalkteilchen erfolgen, wobei jedoch die Gefahr derartiger Kalkteilchen durch eine Anordnung der Abzweigung 9 stromauf der Heizeinrichtung 4 und damit in einem Kaltwasserbereich im Vergleich zu einem Fall, bei welchem die Abzweigung 9 stromab der Heizeinrichtung 4 und damit in einem Heißwasserbereich angeordnet wäre, deutlich reduziert werden kann. Um die Gefahr des Verstopfens der Blende 11 bzw. der Drossel 12 weiter minimieren zu können, kann zwischen dem Wassertank 3 und der Pumpe 7 ein Sieb 13 angeordnet sein, dessen Maschenweite kleiner ist als eine Öffnung der Blende 11 oder der Drossel 12, wodurch bereits aus dem Wassertank 3 sich lösende Kalkteilchen im Sieb 13 zurückgehalten und dadurch nicht zu einer Verstopfung der Blende 11 bzw. der Drossel 12 führen können.

Des Weiteren kann die Blende 11 oder die Drossel 12 zumindest teilweise aus Edelstahl oder aus Polytetrafluorethylen ausgebildet sein und dadurch die Gefahr eines Anhaftens von Kalkablagerungen zumindest minimieren, was ebenfalls die Gefahr eines Verstopfens reduziert.

Betrachtet man die Fig. 1 und 2 weiter, so kann man erkennen, dass in der Wasserleitung 5 stromauf der Pumpe 7 ein Durchflussmengenmesser 14 angeordnet ist, der bspw. mit einer nicht gezeigten Steuerungseinrichtung an einer Steuerungssoftware kommunizierend verbunden ist und die jeweils zum Aufbrühen eines Getränks bereitgestellte Wassermenge überwacht. Der Durchflussmengenmesser 14 ist dabei jedoch lediglich optional vorgesehen. In der Wasserleitung 5 stromab der Pumpe 7 und stromauf oder stromab der Abzweigung 9 sowie stromauf der Heizeinrichtung 4 kann ein Kaltwassertemperatursensor 15 angeordnet sein, während stromab der Heizeinrichtung 4 ein Heißwassertemperatursensor 16 angeordnet sein kann. Ebenfalls stromab der Heizeinrichtung 4 und stromauf der Brüheinrichtung 6 ist ein Rücklaufsperrventil 17 vorgesehen, welches nach Abschluss des Brühvorgangs und erkaltendem Wasser in der Heizeinrichtung 4 und damit entstehendem Unterdruck ein Ansaugen von Wasser und/oder Getränkeresten aus der Brüheinrichtung 6 verhindert.

Der Druckausgleichspfad 8 weist dabei einen lichten Innendurchmesser von ca. 1 mm auf und hieraus resultierend einen lichten Durchflussquerschnitt von ca. 0,785 mm². Dies zeigt bereits, wie klein der durchströmbare Querschnitt des Druckausgleichspfads 8 ist. Ein Durchmesser der Blende 11 kann beispielsweise 0,4 mm betragen. Bei einer Getränkezubereitung erfolgt immer auch eine geringe Durchströmung von der Abzweigung 9 über den Druckausgleichspfad 8 und die blende 11 bzw. die Drossel 12 in den Wassertank 3. Aus diesem Grund sind der Druckausgleichspfad 8, die Blende 11 und/oder die Drossel 12 mit einem vergleichsweise geringen Innendurchmesser ausgeführt, damit nicht zu viel Wasser im Kreis gepumpt wird.

Mit dem erfindungsgemäßen Heißgetränkeautomaten 1 lässt sich ein Druckausgleich vergleichsweise einfach und ohne die hierfür bislang erforderlichen und teuren sowie konstruktiv aufwendigen Ventile erreichen.

### Bezugszeichenliste

- 1: Heißgetränkeautomat
- 2: Kaffeevollautomat
- 3: Wassertank
- 4: Heizeinrichtung
- 5: Wasserleitung
- 6: Brüheinrichtung
- 7: Pumpe
- 8: Druckausgleichspfad
- 9: Abzweigung
- 10: Wasserspiegel
- 11: Blende
- 12: Drossel
- 13: Sieb
- 14: Durchflussmengenmesser
- 15: Kaltwassertemperatursensor
- 16: Heißwassertemperatursensor
- 17: Rücklaufsperrventil

## Patentansprüche

1. Heißgetränkeautomat (1), insbesondere ein Kaffeevollautomat (2), mit einem Wassertank (3), einer vom Wassertank (3) zu einer Heizeinrichtung (4) führenden Wasserleitung (5), einer zwischen dem Wassertank (3) und der Heizeinrichtung (4) in der Wasserleitung (5) angeordneten Pumpe (7) und einer stromab der Heizeinrichtung (4) am Ende der Wasserleitung (5) angeordneten Brüheinrichtung (6), **dadurch gekennzeichnet, dass** ein ventilfreier Druckausgleichspfad (8) vorgesehen ist, der an einer Abzweigung (9) zwischen der Pumpe (7) und der Heizeinrichtung (4) aus der Wasserleitung (5) abzweigt und der oberhalb eines Wasserspiegels (10) in den Wassertank (3) mündet, wobei in dem Druckausgieichspfad (8) eine Blende (11) oder eine Drossel (12) angeordnet ist.

2. Heißgetränkeautomat nach Anspruch 1, **dadurch gekennzeichnet, dass** der Druckausgleichspfad (8) unmittelbar stromauf der Heizeinrichtung (4) aus der Wasserleitung (5) abzweigt.

3. Heißgetränkeautomat nach Anspruch 1 oder 2, **dadurch gekennzeichnet, dass** die Blende (11) oder die Drossel (12) im Bereich der Einmündung des Druckausgleichspfads (8) in den Wassertank (3) angeordnet ist.

4. Heißgetränkeautomat nach Anspruch 1 oder 2, **dadurch gekennzeichnet, dass** die Blende (11) oder die Drossel (12) im Bereich der Abzweigung (9) des Druckausgleichspfads (8) aus der Wasserleitung (5) angeordnet ist.

5. Heißgetränkeautomat nach einem der vorhergehenden Ansprüche, **dadurch gekennzeichnet, dass** zwischen dem Wassertank (3) und der Pumpe (7) ein Sieb (13) angeordnet ist, dessen Maschenweite kleiner ist als eine Öffnung der Blende (11) oder der Drossel (12).

6. Heißgetränkeautomat nach einem der Ansprüche 1 bis 5, **dadurch gekennzeichnet, dass** in der Wasserleitung (5) stromab der Heizeinrichtung (4) und stromauf der Brüheinrichtung (6) ein Rücklaufsperrventil (17) angeordnet ist.

7. Heißgetränkeautomat nach einem der vorhergehenden Ansprüche, **dadurch gekennzeichnet, dass** in der Wasserleitung (5) stromauf der Pumpe (7) ein Durchflussmengenmesser (14) angeordnet ist.

8. Heißgetränkeautomat nach einem der vorhergehenden Ansprüche, **dadurch gekennzeichnet, dass** in der Wasserleitung (5) stromab der Pumpe (7) und stromauf der Heizeinrichtung (4) ein Kaltwassertemperatursensor (15) und/oder stromab der Heizeinrichtung (4) ein Heißwassertemperatursensor (16) vorgesehen sind/ist.

9. Heißgetränkeautomat nach einem der Ansprüche 1 bis 8, **dadurch gekennzeichnet, dass** der Druckausgleichspfad (8) einen lichten Durchflussquerschnitt von ca. 0,785 mm² aufweist.

10. Heißgetränkeautomat nach einem der Ansprüche 1 bis 9, **dadurch gekennzeichnet, dass** die Blende (11) oder die Drossel (12) zumindest teilweise aus Edelstahl oder Polytetrafluorethylen ausgebildet sind.

## Claims

1. Hot beverage machine (1), in particular coffee machine (2), with a water tank (3), a water line (5) leading from the water tank (3) to a heating device (4), a pump (7) arranged between the water tank (3) and the heating device (4) in the water line (5) and a brewing device (6) arranged downstream of the heating device (4) at the end of the water line (5), **characterised in that** a valve-free pressure equalisation path (8) is provided, which at a branching (9) between the pump (7) and the heating device (4) branches off from the water line (5) and opens into the water tank (3) above a water level (10), wherein a panel (11) or a throttle (12) is arranged in the pressure equalisation path (8).

2. Hot beverage machine according to claim 1, **characterised in that** the pressure equalisation path (8) branches off from the water line (5) directly upstream of the heating device (4).

3. Hot beverage machine according to claim 1 or 2, **characterised in that** the panel (11) or the throttle (12) is arranged in the region of the junction of the pressure equalisation path (8) in the water tank (3).

4. Hot beverage machine according to claim 1 or 2, **characterised in that** the panel (11) or the throttle (12) is arranged in the region of the branching (9) of the pressure equalization path (8) from the water line (5).

5. Hot beverage machine according to one of the preceding claims, **characterised in that** a filter (13) is arranged between the water tank (3) and the pump (7), the mesh size of which is smaller than an opening in the panel (11) or the throttle (12).

6. Hot beverage machine according to one of claims 1 to 5, **characterised in that** a non-return valve (17) is arranged in the water line (5) downstream of the heating device (4) and upstream of the brewing device (6).

7. Hot beverage machine according to one of the preceding claims, **characterised in that** a flow rate meter (14) is arranged in the water line (5) upstream of the pump (7).

8. Hot beverage machine according to one of the preceding claims, **characterised in that** in the water line (5) a cold water temperature sensor (15) is provided downstream of the pump (7) and upstream of the heating device (4) and/or a hot water temperature sensor (16) is provided downstream of the heating device (4).

9. Hot beverage machine according to one of claims 1 to 8, **characterised in that** the pressure equalisation path (8) has a clear flow cross-section of approx. 0.785 mm².

10. Hot beverage machine according to one of claims 1 to 9, **characterised in that** the panel (11) or the throttle (12) are embodied at least partially from stainless steel or polytetrafluorethylene.

## Revendications

1. Distributeur de boissons chaudes (1), en particulier une machine à café intégralement automatique (2), avec un réservoir à eau (3), une conduite d'eau (5) menant du réservoir à eau (3) vers un dispositif de chauffe (4), une pompe (7) disposée entre le réservoir à eau (3) et le dispositif de chauffe (4) dans la conduite d'eau (5) et un dispositif d'échaudage (6) disposé en aval du dispositif de chauffe (4) à l'extrémité de la conduite d'eau (5), **caractérisé en ce qu'**un chemin de compensation de pression (8) exempte de soupape est prévu, lequel bifurque de la conduite d'eau (5) en une bifurcation (9) entre la pompe (7) et le dispositif de chauffe (4) et débouche au dessus d'un niveau d'eau (10) dans le réservoir à eau (3), dans lequel un obturateur (11) ou un étrangleur (12) est disposé dans le chemin de compensation de pression (8).

2. Distributeur de boissons chaudes selon la revendication 1, **caractérisé en ce que** le chemin de compensation de pression (8) bifurque de la conduite d'eau (5) immédiatement en amont du dispositif de chauffe (4).

3. Distributeur de boissons chaudes selon la revendication 1 ou 2, **caractérisé en ce que** l'obturateur (11) ou l'étrangleur (12) est disposé dans la zone de l'embouchure du chemin de compensation de pression (8) dans le réservoir à eau (3).

4. Distributeur de boissons chaudes selon la revendication 1 ou 2, **caractérisé en ce que** l'obturateur (11) ou l'étrangleur (12) est disposé dans la zone de la bifurcation (9) du chemin de compensation de pression (8) au départ de la conduite d'eau (5).

5. Distributeur de boissons chaudes selon l'une des revendications précédentes, **caractérisé en ce qu'**un filtre (13) dont le maillage est inférieur à un orifice de l'obturateur (11) ou de l'étrangleur (12) est disposé entre le réservoir à eau (3) et la pompe (7).

6. Distributeur de boissons chaudes selon l'une des revendications 1 à 5, **caractérisé en ce qu'**une soupape anti-retour (17) est disposée dans la conduite d'eau (5), en aval du dispositif de chauffe (4) et en amont du dispositif d'échaudage (6).

7. Distributeur de boissons chaudes selon l'une des revendications précédentes, **caractérisé en ce qu'**un débitmètre (14) est disposé dans la conduite d'eau (5), en amont de la pompe (7).

8. Distributeur de boissons chaudes selon l'une des revendications précédentes, **caractérisé en ce qu'**un capteur de température d'eau froide (15) est prévu dans la conduite d'eau (5), en aval de la pompe (7) et en amont du dispositif de chauffe (4) et/ou un capteur de température d'eau chaude (16) est prévu en aval du dispositif de chauffe (4).

9. Distributeur de boissons chaudes selon l'une des revendications 1 à 8, **caractérisé en ce que** le chemin de compensation de pression (8) présente une section de passage intérieure d'environ 0,785 mm2.

10. Distributeur de boissons chaudes selon l'une des revendications 1 à 9, **caractérisé en ce que** l'obturateur (11) ou l'étrangleur (12) sont au moins partiellement formés en acier inoxydable ou en polytétrafluoroéthylène.
